# EUROPÄISCHE PATENTSCHRIFT

(11) **EP 0 517 031 B1**
(45) Veröffentlichungstag und Bekanntmachung des Hinweises auf die Patenterteilung: **24.07.1996**
(21) Anmeldenummer: 92108414.1
(22) Anmeldetag: 19.05.1992
(51) Int. Cl.: H01R 43/24, B29C 45/14, B29C 45/06, B29C 45/04

(54) **Vorrichtung zum Anbringen eines Schutzkörpers am Ende einer elektrischen Leitung**
Device for applying a protective body to the end of an electrical lead
Dispositif pour appliquer un corps de protection à une extrémité d'un câble électrique

(30) Priorität: 01.06.1991 DE 4118005
(43) Veröffentlichungstag der Anmeldung: 09.12.1992
(73) Patentinhaber: kabelmetal electro GmbH, D-30002 Hannover (DE)
(72) Erfinder: Hoffman, Ernst, W-3012 Langenhagen (DE); Zimmer, Dieter, W-7553 Muggensturm (DE); Porcher, Klaus, W-3160 Lehrte (DE); Staschewski, Harry, W-3012 Langenhagen (DE)

(56) Entgegenhaltungen:
- CH-A- 357 505
- DE-A- 3 720 041
- US-A- 4 030 174
- PATENT ABSTRACTS OF JAPAN vol. 9, no. 202 (M-405)(1925) 20. August 1985 & JP A 6064821

## Beschreibung

Die Erfindung bezieht sich auf eine Vorrichtung zum Anbringen eines Schutzkörpers aus Isoliermaterial am Ende einer mindestens eine Ader aufweisenden elektrischen Leitung, an deren abisoliertem Leiter ein Kontaktelement angebracht ist, bestehend aus einer Spritzgießeinheit, in welcher der Schutzkörper um das Kontaktelement und das Leitungsende herumgespritzt wird, welche einen um eine Achse drehbaren Träger, an dem mindestens drei Aufnahmen zum Einlegen des mit dem Kontaktelement bestückten Ende des Leiters angebracht sind, sowie mindestens eine im Bereich der Umfangsfläche des Trägers angeordnete, zusammen mit den Aufnahmen die Spritzgießeinheit bildende Spritzgießvorrichtung aufweist und bei welcher die Aufnahmen in Umfangsrichtung in gleichbleibenden Abständen gegeneinander versetzt jeweils im gleichen Abstand von der Achse des Trägers an demselben befestigt sind (FR-A-1 458 756).

"Teil eines elektrischen Steckverbinders" kann ein Stecker oder eine Dose sein. Als Kontaktelemente sind Stifte oder Buchsen an dem Leiter der Ader angebracht. Leitungen, bei denen ein Stecker oder auch eine Dose unlösbar an einem Ende angeformt sind, werden als "konfektionierte" Leitungen bezeichnet. Bei solchen Leitungen bleibt das zweite Ende in der Regel frei. Die Leitungen werden beispielsweise als Halbfabrikate an die Verbraucherindustrie weitergegeben, welche dieselben an beliebige elektrische Geräte anbaut.

Hierzu ist es erforderlich, daß auf der einen Seite der gewünschte Teil des Steckverbinders an die Leitung angespritzt und die andere Seite der Leitung so vorbereitet wird, daß sie ohne zusätzlichen Aufwand an das Gerät angeschlossen werden kann. Es sind allerdings auch konfektionierte Leitungen bekannt, bei denen an beiden Enden Teile von Steckverbindern angebracht sind.

In der DE-C-2 440 264 ist ein Verfahren beschrieben, mit dem konfektionierte Leitungen hergestellt werden können. Dieses Verfahren arbeitet bis zur Anbringung von Kontaktelementen an den abisolierten Leitern der Leitungen vollautomatisch. In dieser Druckschrift ist zwar auch erwähnt, daß der Schutzkörper automatisch gespritzt werden kann, jedoch sind über den Aufbau einer entsprechenden Vorrichtung keine Angaben gemacht. Es ist außerdem vorgesehen, daß um die mit Kontaktelementen bestückten Leitungsenden in gesonderten Arbeitsgängen in vorhandenen Spritzmaschinen Schutzkörper herumgespritzt werden. In diese Spritzmaschinen müssen die Leitungsenden einzeln oder auch zu mehreren von Hand eingelegt werden. Der Aufwand zur Herstellung einer konfektionierten Leitung ist also erheblich.

Mit der bekannten Vorrichtung nach der DE-A-3 720 041 können mit taktweisem Vorschub konfektionierte Leitungen automatisch hergestellt werden. Ein mit Kontaktelementen bestücktes Ende einer Leitung wird dabei unter Beibehaltung des taktweisen Vorschubs durch mindestens zwei Spritzgießeinheiten geführt. In jeder Spritzgießeinheit wird ein Teilkörper des zu erzeugenden Schutzkörpers gespritzt. Die Materialmenge der Teilkörper ist jeweils so bemessen, daß jeder Teilkörper während der durch den Takt bestimmten Zeit ausreichend fest wird, um ohne Beschädigungsgefahr weitertransportiert werden zu können. Mit dieser Vorrichtung kann zwar in einem Arbeitsgang eine konfektionierte Leitung hergestellt werden.

Der Aufwand dafür ist aber relativ hoch, da für jeden Teilkörper eine eigene Spritzgießvorrichtung benötigt wird. Die Teilkörper müssen außerdem mit großer Sorgfalt gespritzt werden, damit sichergestellt ist, daß sich insgesamt ein homogener Schutzkörper ergibt.

Die eingangs beschriebene Vorrichtung nach der FR-A- 1 458 756 besteht aus einem um seine Achse drehbaren Träger, in dessen Umfangsbereich zwei voneinander getrennte Spritzgießvorrichtungen angeordnet sind. Der Träger hat neun Ausnahmen zum Einlegen von mit Kontaktelementen bestückten elektrischen Leitungen. Er wird mit taktweisem Vorschub gedreht. Dabei werden in der ersten, mit einem vollständigen Schließwerkzeug ausgerüsteten Spritzgießvorrichtung Teilkörper um die Leitungsenden herumgespritzt. Nach dem Öffnen des Werkzeugs der ersten werden die gespritzten Teilkörper in einer weiteren Station abgekühlt. Sie werden anschließend in der zweiten Spritzgießvorrichtung, die wieder ein vollständiges Schließwerkzeug hat, so umspritzt, daß fertige Spritzkörper an den Leitungsenden angebracht sind.

Der Erfindung liegt die Aufgabe zugrunde, die eingangs geschilderte Vorrichtung so zu gestalten, daß der Schutzkörper auf einfache Weise als einteiliger Schutzkörper um ein mit Kontaktelementen bestücktes Leitungsende automatisch herumgespritzt werden kann.

Diese Aufgabe wird gemäß der Erfindung dadurch gelöst,
- daß die Aufnahmen des Trägers als Komplette Spritzformen ausgebildet sind,
- daß an einem feststehenden Teil der Vorrichtung im Bereich des Trägers eine in Umfangsrichtung desselben verlaufende Führungsbahn angebracht ist, die aus zwei konzentrisch zur Achse des Trägers verlaufenden, in Umfangsrichtung hintereinander angeordneten Teilen mit unterschiedlichen Radien besteht, die sich zusammen über nahezu 360° erstrecken, die an einem ihrer Enden durch ein Übergangs stück der Führungsbahn ineinander übergehen und die an ihren anderen Enden in Höhe der Ladeposition der Spritzformen liegen,
- daß an den Spritzformen Führungselemente angebracht sind, die in die Führungsbahn eingreifen und in Höhe der Ladeposition um einen dem Unterschied der Radien der beiden Teile der Führungsbahn entsprechenden Weg in radialer Richtung verstellbar sind,
- daß die Spritzformen beim Durchlaufen der Führungsbahn in deren Teil mit dem kleineren Radius geschlossen und in dem Teil mit dem größeren Radius geöffnet sind und
- daß der Träger in Schritten jeweils um einen Winkel drehbar ist, der dem Abstand der Spritzformen voneinander entspricht.

Mit dieser Vorrichtung ist es möglich, den Schutzkörper für einen Teil eines elektrischen Steckverbinders vollautomatisch an das Ende einer elektrische Leitung anzuspritzten. Dabei ist es unerheblich, wie die mit zu umspritzenden Kontaktelemente am Ende der Leitung angebracht wurden und wie die Leitung der Vorrichtung zugeführt wird. Durch den drehbaren Träger der Spritzgießeinheit, an dem mindestens drei Spritzformen angebracht sind, kann bei jedem Schritt des Trägers eine mit Kontaktelementen bestückte Leitung für den Spritzvorgang zur Herstellung des Schutzkörpers übernommen werden. Da die Spritzformen am Träger befestigt sind und daher mit demselben schrittweise gedreht werden, steht vor dem Entformen des Schutzkörpers genügend Zeit zur Abkühlung des Spritzmaterials zur Verfügung. An der Entnahmestelle, an der die Spritzformen geöffnet werden, kann pro Schritt eine fertig konfektionierte Leitung entnommen werden. Der Schutzkörper ist dann bereits so verfestigt, daß keine Beschädigungsgefahr besteht.

Vorteilhafte Ausgestaltungen der Erfindung gehen aus den Unteransprüchen hervor.

Ausführungsbeispiele des Erfindungsgegenstandes sind in den Zeichnungen dargestellt.

Es zeigen:

Fig. 1 und 2 die Vorrichtung nach der Erfindung in zwei unterschiedlichen Ansichten in schematischer Darstellung.

Fig. 3 eine Ansicht des Endes einer mit der Vorrichtung konfektionierten elektrischen Leitung, teilweise im Schnitt.

Fig. 4 eine gegenüber Fig. 1 ergänzte Vorrichtung.

Fig. 5 bis 8 Einzelheiten der Vorrichtung in vergrößerter Darstellung.

Mit der Vorrichtung nach der Erfindung können Schutzkörper an elektrische Leitungen mit nur einer Ader oder mit zwei oder mehr Adern angespritzt werden. Die Anzahl der Kontaktelemente richtet sich nach der Anzahl der Adern. Als Kontaktelemente können Stifte oder Dosen an den Enden der Leitungen angeschlossen sein.

In allen Figuren der Zeichnungen ist die Vorrichtung nach der Erfindung in Prinzipdarstellungen so wiedergegeben, wie es für das Verständnis derselben erforderlich ist.

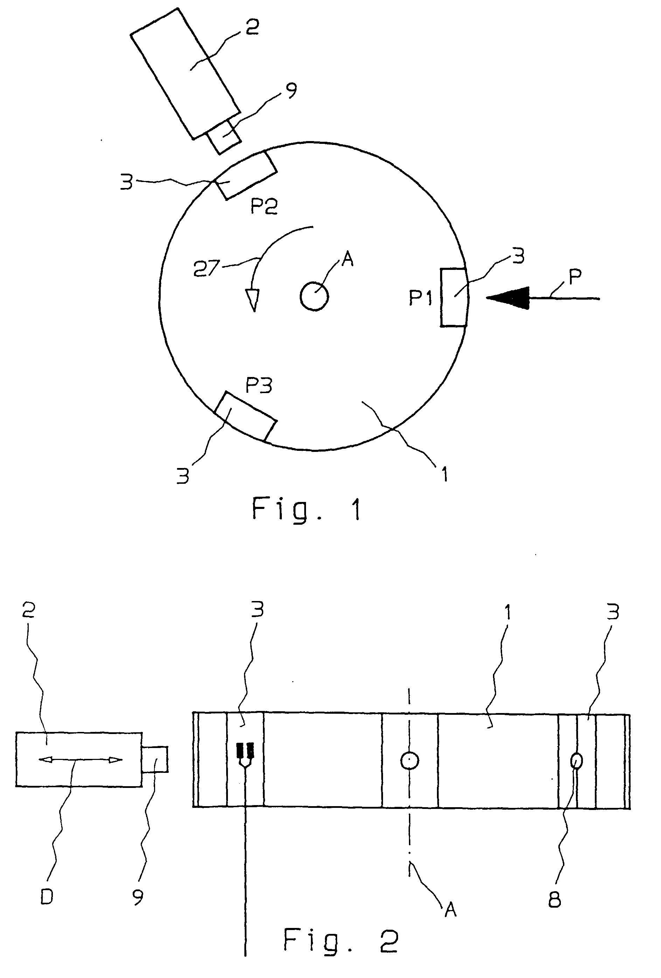

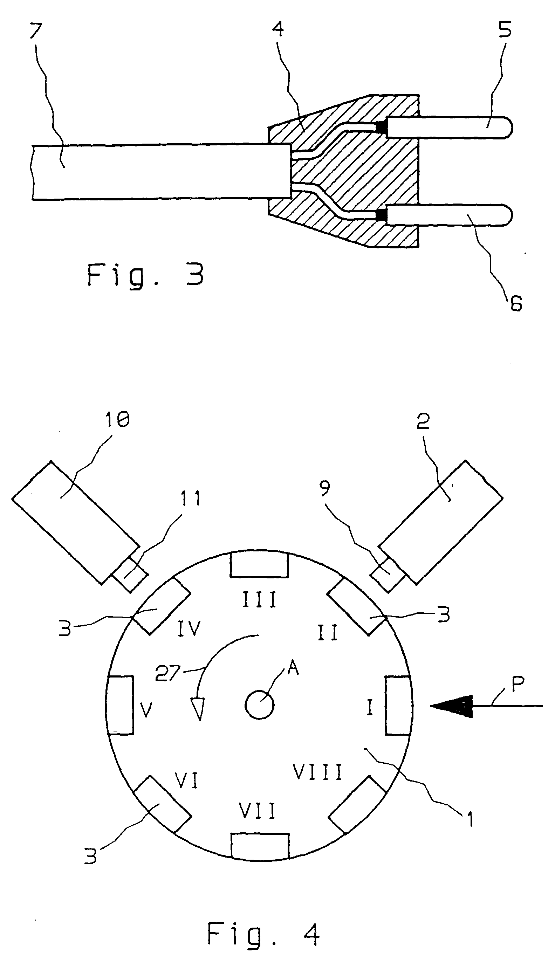

Die in Fig. 1 dargestellte Spritzgießeinheit besteht aus einem um eine Achse A drehbaren Träger 1 und aus einer Spritzgießvorrichtung 2 - im folgenden als "Extruder 2" bezeichnet. Jeweils im gleichen radialen Abstand von der Achse A sind am Träger 1 drei um jeweils 120° gegeneinander versetzte Spritzformen 3 angebracht, in denen ein aus Fig. 3 ersichtlicher Schutzkörper 4 um das Ende einer mit Steckerstiften 5 und 6 bestückten Leitung 7 herumgespritzt wird. Die Spritzformen 3 haben jeweils eine in der Umfangsfläche des Trägers 1 liegende Einlaßöffnung 8 (Fig. 2), durch welche das Material des Schutzkörpers 4 in die geschlossene Spritzform 3 eingespritzt werden kann. Dazu ist der Spritzkopf 9 der Spritzgießvorrichtung (Extruder 2) so angeordnet, daß seine Austrittsöffnung genau in Höhe der Einlaßöffnungen 8 der Spritzformen 3 liegt. Der Extruder 2 ist in radialer Richtung relativ zum Träger 1 verschiebbar, so wie es in Fig. 2 durch den Doppelpfeil D angedeutet ist.

Die Einlaßöffnungen 8 der Spritzformen 3 könnten prinzipiell auch in einer Seitenfläche des Trägers 1 liegen. Der Extruder 2 müßte dann eine entsprechend andere Position haben. Er wäre dann relativ zum Träger 1 in axialer Richtung verschiebbar.

Die Vorrichtung nach der Erfindung arbeitet beispielsweise wie folgt:

Das Ende einer mit Steckerstiften 5 und 6 bestückten Leitung 7 wird in Richtung des Pfeiles P in eine geöffnete Spritzform 3 in der Ladeposition P1 eingelegt. Die Leitung 7 wird dabei möglichst gestreckt gehalten, damit sie nicht direkt an der Spritzform 3 abknickt. Der Träger 1 wird dann um einen dem Abstand der Spritzformen 3 voneinander entsprechenden Winkel gedreht. Spätestens während der Drehbewegung des Trägers 1 wird die Spritzform 3 automatisch geschlossen. Die Spritzform 3 mit dem eingelegten Leitungsende gelangt durch die Drehung in die Position P2. In Ladeposition P1 des Trägers 1 wird jetzt eine weitere mit Steckerstiften 5 und 6 bestückte Leitung 7 in die dort befindliche Spritzform 3 eingelegt. Die in Position P2 befindliche Spritzform 3 wird vom Extruder 2 mit Spritzmaterial gefüllt. Dazu ist der Extruder 2 dicht an den Träger 1 bzw. die Spritzform 3 herangefahren. Nach Füllung der Spritzform 3 fährt der Extruder 2 wieder in seine Ausgangsposition zurück. Die gefüllte Spritzform 3 mit dem so hergestellten Schutzkörper 4 gelangt beim nächsten Schritt des Trägers 1 in die Position P3. In dieser Position ist die Spritzform 3 geöffnet und die fertig konfektionierte Leitung 7 kann entnommen werden.

Der Träger 1 wird schrittweise entsprechend dem Abstand zwischen zwei Spritzformen 3 gedreht. Bei der Ausführungsform nach Fig. 1 mit drei Spritzformen 3 wird der Träger 1 jeweils um 120° gedreht. Das kann automatisch, beispielsweise durch einen Elektromotor durchgeführt werden. Dabei kann es sich in bevorzugter Ausführungsform um einen elektrischen Schrittmotor handeln. Es kann aber auch ein Motor mit einem Schrittgetriebe eingesetzt werden.

Die mit den Steckerstiften 5 und 6 ausgerüsteten Leitungen 7 werden der jeweils in der Ladeposition P1 befindlichen Spritzform 3 vorzugsweise automatisch zugeführt. Dazu kann ein geeignetes Transportsystem eingesetzt werden, das an die Schrittgeschwindigkeit angepaßt ist, mit der der Träger 1 gedreht wird.

Wenn die Vorrichtung nach der Erfindung zusammen mit einem sogenannten Konfektionierungsautomaten eingesetzt werden soll, mit dem die Steckerstifte 5 und 6 automatisch, mit taktweisem Durchlauf durch mehrere Bearbeitungsstationen an der Leitung 7 angebracht werden, dann wird vorzugsweise eine aus Fig. 4 ersichtliche Ausführungsform verwendet.

Bei der Spritzgießeinheit nach Fig. 4 sind am Träger 1 acht Spritzformen 3 angebracht. Es ist außerdem ein zweiter Extruder 10 mit einem Spritzkopf 11 vorgesehen. Eine solche Spritzgießeinheit läßt sich leicht an den Takt eines Konfektionierungsautomaten anpassen. Der Träger 1 wird entsprechend diesem Takt in Schritten gedreht, die wieder dem Abstand der Spritzformen 3 voneinander entsprechen. Die Drehung erfolgt hier jeweils um einen Winkel von 45°.

Die Vorrichtung nach Fig. 4 arbeitet wie folgt:

Eine mit Steckerstiften 5 und 6 bestückte Leitung 7 wird in Ladeposition I der dort befindlichen, geöffneten Spritzform 3 übergeben (Pfeil P). Bei der nächsten Drehung des Trägers 1 gelangt diese Spritzform in Position II. In dieser Position befindet sich der Extruder 2, der beim hier geschilderten Anfahren der Vorrichtung aber zunächst passiv bleibt. Die Spritzform 3 wird vor dem Drehen von der Ladeposition I zur Position II geschlossen. In der Ladeposition I wird eine weitere Leitung 7 in die dort befindliche Spritzform 3 übergeben. Das passiert jeweils nach Drehung des Trägers 1.

Die Spritzform 3 mit der ersten eingelegten Leitung 7 gelangt beim nächsten Schritt des Trägers 1 in Position III, während die Spritzform 3 mit der zweiten Leitung 7 in Position II hält. Bei diesem Schritt wird der Extruder 2 aktiv, so daß die Spritzform 3 analog zur Schilderung für Fig. 1 gefüllt wird. Beim nächsten Schritt des Trägers 1 wird die Spritzform 3 mit der ersten Leitung 7 in Position IV vom Extruder 10 gefüllt. Bei diesem Schritt ist der Extruder 2 wieder passiv.

Während des Betriebes der Vorrichtung ist pro Schritt des Trägers 1 abwechselnd immer nur einer der beiden Extruder 2 oder 10 aktiv. Sie werden für den Spritzvorgang jeweils an den Träger 1 herangefahren, so daß ihre Spritzköpfe 9 bzw. 11 jeweils an den Einlaßöffnungen 8 der Spritzformen 3 liegen. In der nicht aktiven Zeit können die Extruder 2 und 10 jeweils für einen weiteren Spritzvorgang vorbereitet werden. Die Vorrichtung ist also auch bei relativ kurzer Taktzeit einsetzbar.

Die vom Extruder 2 gefüllte Spritzform 3 durchläuft schrittweise die Positionen III, IV, V und VI. Während dieser Zeit ist das eingespritzte Material des Schutzkörpers 4 ausreichend abgekühlt. Es kann dazu gegebenenfalls eine zusätzliche Kühlung vorgesehen werden, beispielsweise durch Wasser. Die konfektionierte Leitung 7 kann in der Position VII aus der wieder geöffneten Spritzform 3 entnommen werden. Sie gelangt in offener Form über die Position VIII wieder in die Ladeposition I. Die konfektionierte Leitung 7 könnte auch in einer vor der Position VII liegenden Position oder auch in Position VIII entnommen werden. Es muß nur sichergestellt sein, daß das Material des Schutzkörpers 4 in der Spritzform 3 bereits ausreichend fest ist. Analog zu dem geschilderten Lauf der Spritzform 3 aus Position II durchläuft die in Position IV gefüllte Spritzform 3 die nachfolgenden Positionen.

Die Vorrichtung nach der Erfindung weist einen drehbaren Träger 1 mit mindestens drei Spritzformen 3 und einem Extruder 2 auf, so wie es aus Fig. 1 hervorgeht. Es können aber auch mehr als drei Spritzformen und mehr als ein Extruder eingesetzt werden. Die jeweilige Anzahl wird von den technischen Notwendigkeit bestimmt. Eine besonders vorteilhaft arbeitende Vorrichtung weist gemäß Fig. 4 acht Spritzformen 3 und zwei abwechselnd aktive Extruder 2 und 10 auf.

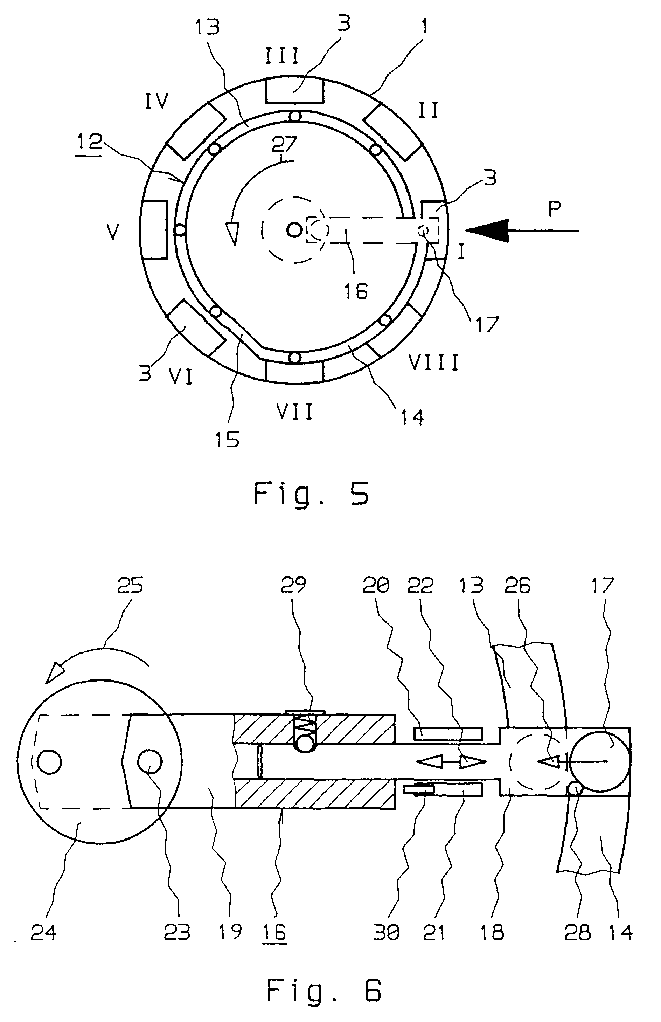

Die Spritzformen 3 werden während der Drehung des Trägers 1 durch eine feststehende Führungsbahn 12 geführt, wie sie beispielsweise aus Fig. 5 hervorgeht. Die Führungsbahn 12 ist an einem feststehenden Teil der Vorrichtung in unmittelbarer Nähe des Trägers 1 angebracht. Sie besteht aus zwei Teilen 13 und 14, die beide konzentrisch zur Achse A des Trägers 1 verlaufen. Der Teil 14 hat einen größeren Radius als der Teil 13. Die beiden Teile 13 und 14 sind in Umfangsrichtung hintereinander angeordnet. Sie erstrecken sich insgesamt über nahezu 360°. An einem Ende sind die beiden Teile 13 und 14 durch ein Übergangsstück 15 der Führungsbahn 12 verbunden. Am anderen Ende liegen die Teile 13 und 14 in Höhe der Ladeposition I bzw. P1.

In Fig. 5 ist ein in seiner Längsrichtung verschiebbarer Hebel 16 gestrichelt eingezeichnet, der in Höhe der Ladeposition I an feststehenden Teilen der Vorrichtung angebracht ist. Der genauere Aufbau des Hebels 16 geht aus Fig. 6 hervor. Er verläuft bezogen auf den Träger 1 in radialer Richtung. Der Hebel 16 dient dazu, an den Spritzformen 3 angebrachte Führungselemente 17 in der Ladeposition I vom Teil 14 der Führungsbahn 12 bis in Höhe des den kleineren Radius aufweisenden Teils 13 derselben zu ziehen. Die Funktionsweise des Hebels 16 wird im folgenden anhand der Fig. 5 und 6 erläutert:

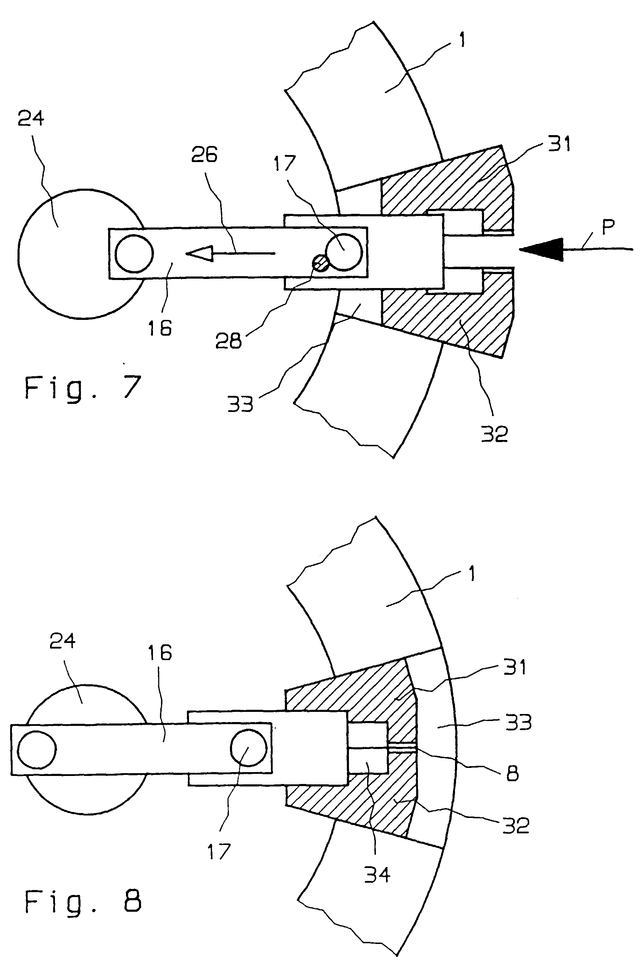

Bei den an den Spritzformen 3 angebrachten Führungselementen 17 handelt es sich beispielsweise um Kugelräder. Sie greifen in die Führungsbahn 12 ein und werden dadurch während der Drehung des Trägers 1 zwangsgeführt. In den Fig. 5 und 6 sind die Führungselemente 17 jeweils durch einen Kreis dargestellt. Ihre Verbindung mit den Spritzformen 3 geht aus den Fig. 7 und 8 hervor.

Der Hebel 16 besteht aus zwei Teilen 18 und 19, die beweglich miteinander verbunden sind. Der Teil 18 ist beispielsweise zwischen Backen 20 und 21 geführt, so daß er eine geradlinige Bewegung in Richtung des Doppelpfeils 22 ausführen kann. Der Teil 19 des Hebels 16 ist an der Drehstelle 23 exzentrisch an der Stirnfläche einer Welle 24 gelagert, die zentral im Träger 1 angeordnet ist. Die Welle 24 wird beispielsweise von einem Elektromotor angetrieben, bei dem es sich vorzugsweise um den gleichen Motor handelt, der auch zum Antrieb des Trägers 1 verwendet wird. Bei einer Drehung der Welle 24 um 180° gelangt die Drehstelle 23 in Richtung des Pfeiles 25 in die in Fig. 6 gestrichelt eingezeichnete Position.

Wenn eine Leitung 7 mit Kontaktelementen 5 und 6 in der Ladeposition I in die dort offene Spritzform 3 eingelegt ist (Pfeil P), wird die Welle 24 um 180° gedreht. Der Hebel 16 wird dadurch in Richtung des Pfeiles 26 in die in Fig. 6 gestrichelt eingezeichnete Position verschoben. Durch diese Bewegung gelangt das Führungselement 17 der in Ladeposition I befindlichen Spritzform 3 aus der Stellung in Höhe des Teils 14 der Führungsbahn 12 in den Bereich des Teils 13 derselben. Sobald das Führungselement 17 diese in Fig. 6 gestrichelt eingezeichnete Position erreicht hat, wird der Träger 1 um einen Schritt in Richtung des Pfeiles 27 gedreht. Die zugehörige Spritzform 3 gelangt dadurch in Position II. Durch die geschilderte Bewegung des Hebels 16 wird die Spritzform 3 geschlossen, so daß sie in Position II bzw. IV durch den dort installierten Extruder 2 bzw. 10 gefüllt werden kann.

Zur Absicherung der exakten Stellung der Spritzform 3 in der Ladeposition I kann am Teil 18 des Hebels 16 ein aus den Fig. 6 und 7 ersichtlicher beweglicher Bolzen 28 angebracht sein. Er wird für den Ladevorgang in eine Position gebracht, in welcher er am Führungselement 17 anliegt. Der Bolzen 28 verhindert eine Bewegung des Führungselements 17 und damit der Spritzform 3 in Richtung des Pfeiles 26 während des Ladevorgangs. Er wird vorzugsweise vor der Bewegung des Hebels 16 in Richtung des Pfeiles 26 zurückgezogen. Der Bolzen 28 kann pneumatisch, hydraulisch oder auch elektrisch betätigt werden.

Am Hebel 16 kann außerdem ein Kraftmesser mit Auslösemechanismus angebracht sein, der dann wirksam wird, wenn die Leitung 7 nicht richtig in die Spritzform 3 eingelegt ist. Die Spritzform 3 könnte dann nicht ohne Zerstörung der Leitung 7 bzw. ohne eigene Beschädigung geschlossen werden. Der Auslösemechanismus stoppt in diesem Fall sofort die ganze Vorrichtung. Als Kraftmesser kann beispielsweise eine Feder 29 eingesetzt sein, durch weiche die Teile 18 und 19 des Hebels 16 kraftschlüssig miteinander verbunden sind. Diese Verbindung wird bei einer falsch eingelegten Leitung 7 gelöst, wenn die Spritzform 3 sich nicht leicht genug schließen läßt. Beispielsweise über einen als Auslösemechanismus dienenden Näherungsschalter 30 wird dann unmittelbar der Antrieb der ganzen Vorrichtung abgeschaltet. Die Feder 29 kann durch ein Federpaket realisiert sein. Es können auch zwei oder mehr Federn eingesetzt werden.

Jede Spritzform 3 durchläuft, geführt von der Führungsbahn 12, schrittweise die Stationen I bis VIII und gelangt dann wieder in die Ladeposition I. Das Führungselement 17 der Spritzformen 3 wird dabei durch die Führungsbahn 12 zwangsgeführt. Im Teil 13 der Führungsbahn 12 sind die Spritzformen 3 geschlossen. Das gilt entsprechend Fig. 5 also für die Positionen II bis VI. Im Teil 14 der Führungsbahn 12 mit den Positionen VII und VIII sind die Spritzformen 3 offen. Die Führungselemente 17 werden dazu durch das Übergangsstück 15 der Führungsbahn 12 geführt und dabei entsprechend dem Verlauf des Übergangsstücks 15 geöffnet.

Die Führungsbahn 12 kann U-förmig ausgebildet sein, so daß die Führungselemente 17 ohne weitere Hilfsmittel zwangsgeführt sind. Es wäre aber auch möglich, eine Führungsbahn mit nur einer Kante zu verwenden, gegen die die Führungselemente 17 mit Federkraft angedrückt werden.

Der prinzipielle Aufbau einer Spritzform 3 geht aus den Fig. 7 und 8 hervor:

Eine Spritzform 3 besteht aus zwei Teilen 31 und 32, die in einer V-förmigen Ausnehmung 33 des Trägers 1 verschiebbar gelagert sind. Sie sind in der Ausnehmung 33 beispielsweise über eine Nut/Feder-Anordnung oder über eine Schwalbenschwanzführung geführt. Die Ausnehmung 33 öffnet sich nach außen. Ihre größere Weite ist also nach außen gerichtet. Beide Teile 31 und 32 der Spritzform 3 sind mit dem Führungselement 17 verbunden. In der Ladeposition I ist die Spritzform 3 entsprechend Fig. 7 geöffnet, so daß eine Leitung 7 in den Teil 32 eingelegt werden kann. Der Hebel 16 zieht - wie oben beschrieben - das Führungselement 17 in Richtung des Pfeiles 26, wodurch die Spritzform 3 entsprechend der Darstellung in Fig. 8 geschlossen wird. In dieser Position kann der Hohlraum 34, in welcher die Leitung 7 liegt, über die Einlaßöffnung 8 mit Spritzmaterial für den Schutzkörper 4 gefüllt werden.

## Patentansprüche

1. Vorrichtung zum Anbringen eines Schutzkörpers (4) aus Isoliermaterial am Ende einer mindestens eine Ader aufweisenden elektrischen Leitung (7), an deren abisoliertem Leiter ein Kontaktelement angebracht ist, bestehend aus einer Spritzgießeinheit, in welcher der Schutzkörper (4) um das Kontaktelement und das Leitungsende herumgespritzt wird, welche einen um eine Achse (A) drehbaren Träger (1), an dem mindestens drei Aufnahmen zum Einlegen des mit dem Kontaktelement bestückten Ende des Leiters angebracht sind, sowie mindestens eine im Bereich der Umfangsfläche des Trägers (1) angeordnete, zusammen mit den Aufnahmen die Spritzgießeinheit bildende Spritzgießvorrichtung aufweist und bei welcher die Aufnahmen in Umfangsrichtung in gleichbleibenden Abständen gegeneinander versetzt jeweils im gleichen Abstand von der Achse (A) des Trägers (1) an demselben befestigt sind, dadurch gekennzeichnet,
- daß die Aufnahmen des Trägers (1) als Komplette Spritzformen (3) ausgebildet sind,
- daß an einem feststehenden Teil der Vorrichtung im Bereich des Trägers (1) eine in Umfangsrichtung desselben verlaufende Führungsbahn (12) angebracht ist, die aus zwei konzentrisch zur Achse (A) des Trägers (1) verlaufenden, in Umfangsrichtung hintereinander angeordneten Teilen (13,14) mit unterschiedlichen Radien besteht, die sich zusammen über nahezu 360° erstrecken, die an einem ihrer Enden durch ein Übergangsstück (15) der Führungsbahn (12) ineinander übergehen und die an ihren anderen Enden in Höhe der Ladeposition (P1,I) der Spritzformen (3) liegen,
- daß an den Spritzformen (3) Führungselemente (17) angebracht sind, die in die Führungsbahn (12) eingreifen und in Höhe der Ladeposition (P1,I) um einen dem Unterschied der Radien der beiden Teile (13,14) der Führungsbahn (12) entsprechenden Weg in radialer Richtung verstellbar sind,
- daß die Spritzformen (3) beim Durchlaufen der Führungsbahn (12) in deren Teil (13) mit dem kleineren Radius geschlossen und in dem Teil (14) mit dem größeren Radius geöffnet sind und
- daß der Träger (1) in Schritten jeweils um einen Winkel drehbar ist, der dem Abstand der Spritzformen (3) voneinander entspricht.

2. Vorrichtung nach Anspruch 1, dadurch gekennzeichnet, daß zur Drehung des Trägers (1) ein Elektromotor, vorzugsweise ein elektrischer Schrittmotor, vorgesehen ist.

3. Vorrichtung nach Anspruch 1 oder 2, dadurch gekennzeichnet, daß an dem Träger (1) in Höhe der Ladeposition (P1,I) ein zwischen den beiden Teilen (13,14) der Führungsbahn (12) in radialer Richtung verstellbarer Hebel (16) angebracht ist, an dessen einem Ende die jeweils in Ladeposition (P1,I) befindliche Spritzform (3) lösbar festgelegt ist.

4. Vorrichtung nach einem der Ansprüche 1 bis 3, dadurch gekennzeichnet, daß der Hebel (16) mit seinem den Spritzformen (3) abgewandten Ende exzentrisch an der Stirnfläche einer zentral im Träger (1) angeordneten, von einem Elektromotor antreibbaren Welle (24) festgelegt ist.

5. Vorrichtung nach einem der Ansprüche 1 bis 4, dadurch gekennzeichnet, daß zur Betätigung des Trägers (1) und der Welle (24) der gleiche Elektromotor eingesetzt ist.

6. Vorrichtung nach einem der Ansprüche 1 bis 5, dadurch gekennzeichnet, daß an dem Hebel (16) ein beweglicher Bolzen (28) zur Fixierung der Lage der jeweiligen Spritzform (3) in der Ladeposition (P1,I) angebracht ist.

7. Vorrichtung nach einem der Ansprüche 1 bis 6, dadurch gekennzeichnet, daß an dem Hebel (16) ein Kraftmesser (29) mit Auslösemechanismus (30) angebracht ist.

8. Vorrichtung nach einem der Ansprüche 1 bis 7, dadurch gekennzeichnet, daß die Spritzformen (3) aus zwei mit dem Führungselement (17) verbundenen Teilen (31,32) bestehen, die in einer V-förmigen Ausnehmung (33) des Trägers (1), die mit ihrer größeren Weite nach außen gerichtet ist, beweglich geführt sind.

9. Vorrichtung nach einem der Ansprüche 1 bis 8, dadurch gekennzeichnet, daß im Bereich der Umfangsfläche des Trägers (1) zwei abwechselnd aktive Spritzgießvorrichtungen (2,10) in einem Abstand zueinander angebracht sind, der dem Abstand zweier Spritzformen (3) in Umfangsrichtung voneinander entspricht.

## Claims

1. Device for fitting a protective body (4) made from insulating material to the end of an electric cable (7) having at least one wire and to whose bared conductor a contact element is fitted, comprising an injection-moulding unit, in which the protective body (4) is injected around the contact element and cable end, which has a support (1), which is rotatable about an axis (A) and to which there are fitted at least three receiving fixtures for the insertion of that end of the conductor equipped with the contact element, and further has at least one injection-moulding device, which is disposed in the region of the peripheral face of the support (1) and forms, together with the receiving fixtures, the injection-moulding unit, and in which the receiving fixtures are fastened to the support, such that they are mutually offset in the peripheral direction at constant spacings, respectively at equal distance from the axis (A) of the support (1), characterized
- in that the receiving fixtures of the support (1) are configured as complete injection moulds (3),
- in that to a fixed part of the device, in the region of the support (1), there is fitted a guideway (12) running in the peripheral direction of the said support, which guideway comprises two parts (13, 14) of different radii, the radii together extending over almost 360°, which parts run concentrically to the axis (A) of the support (1) and are disposed one behind the other in the peripheral direction and, at one of their ends, by virtue of a transition piece (15) of the guideway (12), merge together and, at their other ends, lie level with the loading position (P1, I) of the injection moulds (3),
- in that to the injection moulds (3) there are fitted guide elements (17), which engage in the guideway (12) and, level with the loading position (P1, I), are adjustable in the radial direction by a measure corresponding to the difference in radii of the two parts (13, 14) of the guideway (12),
- in that the injection moulds (3), as they pass through the guideway (12), are closed in its part (13) of lesser radius and are open in the part (14) of greater radius, and
- in that the support (1) is rotatable, in steps, respectively about an angle corresponding to the spacing between the injection moulds (3).

2. Device according to Claim 1, characterized in that, for the rotation of the support (1), an electric motor, preferably an electric stepping motor, is provided.

3. Device according to Claim 1 or 2, characterized in that to the support (1), level with the loading position (P1, I), there is fitted a lever (16), which is adjustable in the radial direction between the two parts (13, 14) of the guideway (12) and at whose one end there is detachably secured that injection mould (3) which is respectively located in the loading position (P1, I).

4. Device according to one of Claims 1 to 3, characterized in that the lever (16) is secured by its end facing away from the injection moulds (3) eccentrically to the end face of a shaft (24), which shaft is disposed centrally in the support (1) and can be driven by an electric motor.

5. Device according to one of Claims 1 to 4, characterized in that the same electric motor is used for the actuation of the support (1) and shaft (24).

6. Device according to one of Claims 1 to 5, characterized in that to the lever (16) there is fitted a movable bolt (28) for fixing the position of the respective injection mould (3) in the loading position (P1, I).

7. Device according to one of Claims 1 to 6, characterized in that to the lever (16) there is fitted a dynamometer (29) with triggering mechanism (30).

8. Device according to one of Claims 1 to 7, characterized in that the injection moulds (3) comprise two parts (31, 32), which are connected to the guide element (17) and are guided movably in a V-shaped recess (33) in the support (1), which recess is directed outward with its greater width.

9. Device according to one of Claims 1 to 8, characterized in that in the region of the peripheral face of the support (1) two alternately active injection-moulding devices (2, 10) are fitted at a distance apart, which distance corresponds to the distance between two injection moulds (3) in the peripheral direction.

## Revendications

1. Dispositif pour appliquer un corps de protection (4) en matériau isolant à l'extrémité d'un câble électrique (7) possédant au moins un brin, câble au conducteur dénudé duquel est appliqué un élément de contact, constitué d'une unité de moulage par injection, dans laquelle le corps de protection (4) est extrudé autour de l'élément de contact et de l'extrémité du câble, lequel présente un support (1) pivotant autour d'un axe (A), auquel sont appliqués au moins trois logements destinés à la pose de l'extrémité du conducteur munie de l'élément de contact, et présente au moins un dispositif de moulage par injection disposé dans la zone de la surface circonférentielle du support (1), formant conjointement avec les logements l'unité de moulage par injection, et sur lequel les logements, dans le sens circonférentiel, sont décalés les uns par rapport aux autres à intervalles constants, en étant fixés chaque fois au support à intervalle égal de l'axe (A) du support (1), caractérisé en ce que :
- les évidements du support (1) sont formés en tant que moules à injection complets (3),
- sur une partie fixe du dispositif, dans la zone du support (1) est appliquée une glissière de guidage (12) passant dans le sens circonférentiel de celui-ci, laquelle glissière de guidage est constituée de deux parties (13, 14) de rayons différents, passant de façon concentrique par rapport à l'axe (A) du support (1), disposées l'une derrière l'autre dans le sens circonférentiel, qui s'étendent au total sur près de 360°, qui à une de leurs extrémités s'emboîtent l'une dans l'autre au moyen d'une pièce de raccord (15) de la glissière de guidage (12) et qui, & leur autre extrémité; se situent à hauteur de la position de chargement (P1, I) des moules à injection (3),
- sont appliqués aux moules à injection (3) des éléments de guidage (17) qui engrènent dans la glissière de guidage (12) et sont réglables dans le sens radial à hauteur de la position de chargement (P1, I) sur une distance correspondant à la différence des rayons des deux parties (13, 14) de la glissière de guidage (12),
- les moules à injection (3), lorsqu'ils passent par la glissière de guidage (12) sont fermés dans leur partie (13) possédant le rayon le plus petit et sont ouverts dans leur partie (14) possédant le rayon le plus grand, et
- le support (1) peut pivoter pas-à-pas chaque fois d'un angle correspondant à l'espacement des moules à injection (3) les uns par rapport aux autres.

2. Dispositif suivant la revendication 1, caractérisé en ce qu'il est prévu pour faire pivoter le support (1) un moteur électrique, de préférence un moteur électrique pas à pas.

3. Dispositif suivant la revendication 1 ou 2, caractérisé en ce qu'est fixé au support (1) à hauteur de la position de chargement (P1, I), dans le sens radial, entre les deux parties (13, 14) de la glissière de guidage (12), un levier (16) réglable & une extrémité duquel est fixé de manière amovible le moule à injection (3) se trouvant chaque fois en position de chargement (P1, I).

4. Dispositif suivant l'une des revendications 1 à 3, caractérisé en ce que le levier (16) est fixé, avec son extrémité opposée aux moules à injection (3), de manière excentrique à la face avant (3) d'un arbre (24) disposé au centre d'un support (1) et pouvant être actionné par un moteur électrique.

5. Dispositif suivant l'une des revendications 1 à 4, caractérisé en ce que le même moteur électrique est utilisé pour actionner le support (1) et l'arbre (24).

6. Dispositif suivant l'une des revendications 1 à 5, caractérisé en ce qu'est appliqué au levier (16) un boulon (28) mobile pour la fixation de la position du moule à injection (3) respectif dans la position de chargement (P1, I).

7. Dispositif suivant l'une des revendications 1 à 6, caractérisé en ce qu'un dynamomètre (29) avec mécanisme de déclenchement (30) est fixé au levier (16).

8. Dispositif suivant l'une des revendications 1 à 7, caractérisé en ce que les moules à injection (3) sont constitués de deux parties (31, 32) reliées à l'élément de guidage (17), qui sont guidées dans un évidement (33) en forme de V du support (1), évidement dont la plus grande largeur est dirigée vers l'extérieur.

9. Dispositif suivant l'une des revendications 1 à 8, caractérisé en ce que dans la zone de la surface circonférentielle du support (1) deux dispositifs de moulage par injection (2, 10) alternativement actifs sont fixés suivant un espacement l'un par rapport à l'autre qui correspond à l'espacement l'un par rapport à l'autre, dans le sens circonférentiel, de deux moules à injection (3).
